# EUROPEAN PATENT SPECIFICATION

(11) **EP 4 603 734 B1**
(45) Date of publication and mention of the grant of the patent: **09.12.2026**
(21) Application number: 23855809.2
(22) Date of filing: 29.12.2023
(51) Int. Cl.: F16L 9/133, B29C 45/16, F16L 23/032, F16L 23/16, F16L 41/02, F28D 1/053, H01M 10/6556, H01M 10/6568

(54) **INJECTION MOLDED TUBE AND BATTERY COOLING STRUCTURE**
SPRITZGEGOSSENES ROHR UND BATTERIEKÜHLUNG
TUBE MOULÉ PAR INJECTION ET STRUCTURE DE REFROIDISSEMENT DE BATTERIE

(43) Date of publication of application: 20.08.2025
(73) Proprietor: Langfang Shuchang Auto Parts Co., Ltd, Langfang, Hebei 065000 (CN)
(72) Inventor: WU, Ruihao, Langfang Hebei 065000 (CN); LIU, Jiaqi, Langfang Hebei 065000 (CN); WEI, Renjie, Langfang Hebei 065000 (CN); XU, Xiaolong, Langfang Hebei 065000 (CN); LU, Qingshan, Langfang Hebei 065000 (CN)
(74) Representative: Gill Jennings & Every LLP
(86) International application number: PCT/CN2023/143669
(87) International publication number: WO 2025/138280

(56) References cited:
- CN-A- 116 221 515
- CN-A- 116 221 515
- CN-U- 217 158 352
- CN-U- 217 764 637
- DE-B4- 102012 223 030
- JP-A- 2004 162 727
- KR-B1- 100 998 358
- US-A- 4 657 286

## Description

### TECHNICAL FIELD

The present application relates to the field of injection-molded tubes, in particular to an injection-molded tube and a battery cooling structure.

### BACKGROUND

Electric vehicle battery pack, also known as battery module, is the core component of electric vehicles, and responsible for storing electrical energy and supplying electrical energy to the vehicle's power system. A battery pack typically consists of multiple battery modules and a cooling structure that can cool the battery pack to reduce the temperature of the battery modules.

The cooling system of the electric vehicle battery pack mainly consists of liquid cooling plates and a connecting pipe for connecting the liquid cooling plates. The liquid cooling plate mainly functions to take away the heat generated by the battery module through contact with it, preventing a sharp increase in battery temperature. The connecting pipe can connect multiple liquid cooling plates to each other, so that the cooling medium can flow into multiple liquid cooling plates through the connecting pipe.

However, it is prone to poor connection between the current liquid cooling plate and connecting pipe, increasing the risk of cooling liquid leakage.

CN116221515A discloses a suitable for the technical field of batteries, and provides a pipeline connecting assembly, a liquid cooling system, a battery and an electric device. The pipeline connecting assembly comprises a first joint and a first connecting pipe, and the first joint is used for communicating with the liquid cooling plate; the first connecting pipe comprises a sealing section and a connecting section which are communicated with each other, the sealing section is hermetically communicated with the first joint, and the inner diameter of the connecting section is smaller than that of the sealing section; the first joint is inserted into the sealing section in a sealing manner; the number of the sealing sections is two, and the two sealing sections are arranged at the two ends of the connecting section correspondingly. The number of the first connectors is two, and the two first connectors are inserted into the two sealing sections in a one-to-one correspondence mode.

US4657286A discloses a tube coupling having a hollow tubular body having collet form couplings at either end thereof to receive and lock tubes in the body at either end. The body has an internal annular wall and an inner line which extends over the wall shoulder and along the body to either side of the annular wall shoulder towards the locations of the collets. The liner is formed from a material which is inert to the fluid to be passed through the tubes and has integral annular seals to seal with the tubes inserted in the body to prevent loss of fluid from the tubes into parts of the body not covered by the liner.

DE102012223030B4 discloses a modularized heat treatment system for a battery in an electric vehicle. In one embodiment, the modularized heat treatment system for the battery in the electric vehicle is provided. The modularized system includes a plurality of manifold sections. Each manifold section further includes a plurality of fluid terminal suitable to be connected to heat exchanging sheets of battery units. Each manifold section is corresponding to a battery set composed of the plurality of units and the heat exchanging sheets. Two adjacent manifold sections are fixed together via at least one manifold clamping member. The manifold clamping member is in a bridging connection with a joint and is jointed with a maintaining structure of each manifold section to prevent the longitudinal separation between the two adjacent manifold sections. The plurality of manifold clamping members fix the plurality of manifold sections together to match the structure of the plurality of battery sets.

### SUMMARY

The present application provides an injection-molded tube and a battery cooling structure for solving the problem that the battery cooling structures in related technologies are prone to liquid leakage.

One aspect of the present application provides an injection-molded tube, including an outer tube and an inner tube, where
the outer tube includes an outer tube body and an injection-molding hole disposed in the outer tube body;
the inner tube is made of a flexible material and is injection-molded onto an inner wall of the outer tube; and
the outer tube further includes a fastening fitting portion disposed on an outer wall of the outer tube body.

In some embodiments, the inner tube covers at least a portion of the inner wall of the outer tube.

In some embodiments, the inner tube covers the entire inner wall of the outer tube.

In some embodiments, the outer tube body includes a straight section and a first variable-diameter section located at a first end of the straight section, and an inner diameter of the first variable-diameter section gradually increases in a direction from the straight section to the first variable-diameter section.

In some embodiments, the outer tube body further includes a second variable-diameter section located at a second end of the straight section, and an inner diameter of the second variable-diameter section gradually increases in a direction from the straight section to the second variable-diameter section.

In some embodiments, the fastening fitting portion includes a fastening protrusion, which is arranged along a circumferential direction of the outer tube body.

In some embodiments, the fastening protrusion is a plurality in number, and the plurality of the fastening protrusions are spaced apart in an axial direction of the outer tube body.

In some embodiments, an outer wall of the outer tube body is further provided with a positioning structure that matches with an injection mold.

In some embodiments, the injection-molded tube further includes an inlet pipe arranged on the outer tube, the inlet pipe communicating with the inner tube.

Another aspect of the present application provides a battery cooling structure, including: a cooling structure and an injection-molded tube as described above.

The cooling structure includes a water-cooled chamber and an insertion structure communicating with the water-cooled chamber, and the insertion structure is connected to the inner tube of the injection-molded tube through interference fit.

The injection-molded tube provided in the present application includes an outer tube and an inner tube. Where, the outer tube is a shell structure of the injection-molded tube, and the inner tube is disposed inside the outer tube and is injection-molded onto the inner wall of the outer tube, so that the connection strength between the inner tube and the outer tube is ensured through injection molding between them. The hardness of the outer tube is greater than that of the inner tube, providing strength support for the injection-molded tube. When the insertion structure of the cooling structure is inserted into the injection-molded tube, since the inner tube is made of the flexible material, it is possible for the insertion structure to be connected with the inner tube through interference fit. In this way, the inner tube is deformed due to the compression of the insertion structure, the outer tube provides strong support for the inner tube, and the inner tube is wrapped around the outer side of the insertion structure by the elastic restoring force, thereby forming a tight connection between the insertion structure and the injection-molded tube. At the same time, the inner tube made of the flexible material may also have the effect of sealing the insertion structure and the outer tube, thereby further reducing the risk of cooling liquid leakage.

In addition, the outer tube further includes a fastening fitting portion disposed on the outer wall of the outer tube body. When the injection-molded tube is matched with the insertion structure in an insertion manner, the fastening fitting portion can facilitate an operator to apply an axial force to the injection-molded tube, thereby enabling the injection-molded tube to be tightly connected to the cooling structure.

By adopting the injection-molded tube of the present embodiment, it is possible to ensure the assembly efficiency of the cooling structure and the injection-molded tube as well as the connection sealing between the cooling structure and the injection-molded tube.

### BRIEF DESCRIPTION OF DRAWINGS

To clearly illustrate technical solutions of various embodiments of the present application, the drawings required for describing various embodiments of the present application are briefly described below. Obviously, the drawings in the following description are merely some embodiments of the present application. For those skilled in the art, other drawings may also be obtained in accordance with the drawings without creative efforts.
FIG. 1 is a cross-sectional view of an injection-molded tube provided by an embodiment of the present application.
FIG. 2 is a structural schematic view of an injection-molded tube provided by an embodiment of the present application.
FIG. 3 is a cross-sectional view of an injection-molded tube provided by an embodiment of the present application.
FIG. 4 is a structural schematic view of a part of a battery cooling structure provided by an embodiment of the present application.
FIG. 5 is an enlarged structural schematic view of the battery cooling structure of FIG. 4 at point A.
FIG. 6 is a cross-sectional view of a part of the battery cooling structure provided by an embodiment of the present application.
FIG. 7 is an enlarged structural schematic view of the battery cooling structure of FIG 6 at point B.

### DESCRIPTION OF EMBODIMENTS

In the following, the technical solutions in the embodiments of the present application will be described clearly and completely with the attached drawings. Obviously, the described embodiments are a part of the embodiments of the present application, not all of them. Based on the embodiments in the present application, all other embodiments obtained by those skilled in the art without creative efforts fall within the scope of protection of the present application.

In related technologies, the cooling system of electric vehicle battery packs mainly consists of liquid cooling plates and a connecting pipe for connecting the liquid cooling plates. The liquid cooling plate mainly functions to take away the heat generated by the battery module through contact with it, thereby preventing a sharp increase in battery temperature.

The working principle of liquid cooling plate is that: the excess heat generated by battery operation is transferred through contact with the surface of the plate-type aluminum device, and the liquid cooling system utilizes its high heat-transfer coefficient of liquid flow and relies on the liquid flow to transfer high heat, which is ultimately carried away by the coolant passing through the internal flow channels of the device.

The connecting pipe can connect multiple liquid cooling plates together, so that the cooling medium can flow into multiple liquid cooling plates through the connecting pipe.

However, there are currently two connection modes between the liquid cooling plate and the connecting pipe, namely plug-in fit and threaded-connection fit. When using the plug-in fit, due to the excessive fit between the liquid cooling plate and the connecting pipe, the connecting pipe is prone to deformation, which in turn makes it easy to loosen between the liquid cooling plate and the connecting pipe. Although using threaded-connection fit may reduce the risk of coolant leakage, it will lead to a decrease in the assembly efficiency of the liquid cooling plate and the connecting pipe.

In view of this, the present application provides an injection-molded tube, which includes an outer tube and an inner tube disposed on the inner wall of the outer tube, and the inner tube is formed of flexible materials. This setting mode allows the insertion structure inserted into the connecting pipe to fit in with the inner tube made of flexible materials in an interference fit, and the inner tube undergoes deformation due to the extrusion of the insertion structure and is wrapped tightly around the outside of insertion structure by the elastic restoring force, forming a tight connection between the insertion structure and the injection-molded tube. At the same time, the inner tube made of flexible material may also have an effect of sealing the insertion structure and the outer tube, thereby further reducing the risk of cooling liquid leakage.

The injection-molded tube and the battery cooling structure provided by the embodiments of the present application will be described below with reference to the attached drawings.

It should be noted that the injection-molded tube provided in the embodiments of the present application can be applied to the battery cooling structure, which can provide cooling for the battery. The battery may be a secondary battery, that is, the battery in the embodiments of the present application may be charged, discharged and recycled. The specific types of batteries may include but are not limited to lithium batteries and so on, and the scenarios where the battery cooling structure may be used include but are not limited to electronic products, energy storage devices, transportation means, etc., such as mobile communication devices, new energy vehicles, drones and the like, the embodiments of the present application do not make specific limitations on this. The scenarios where the injection-molded tubes are used are also not limited to battery cooling structures, and the injection-molded tubes may also be applied in situations where they are connected to plug-in structures to prevent leakage of circulating media.

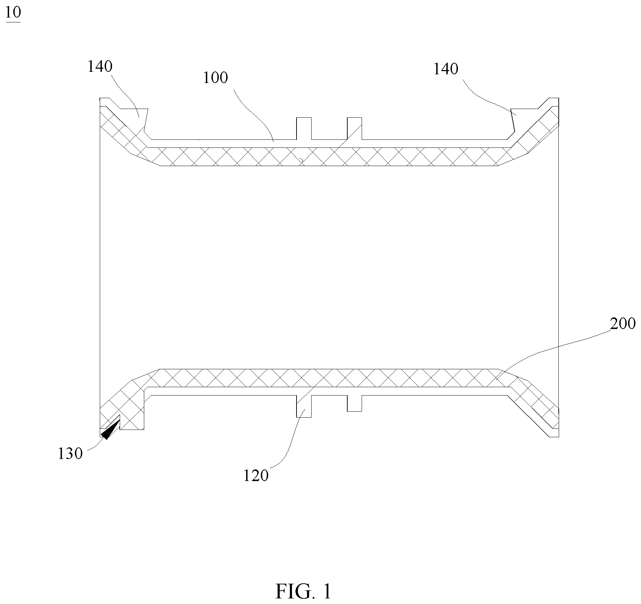

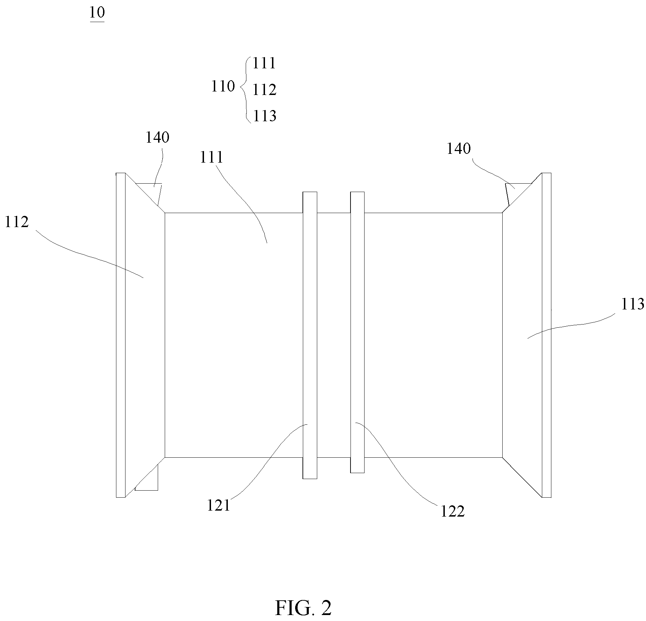

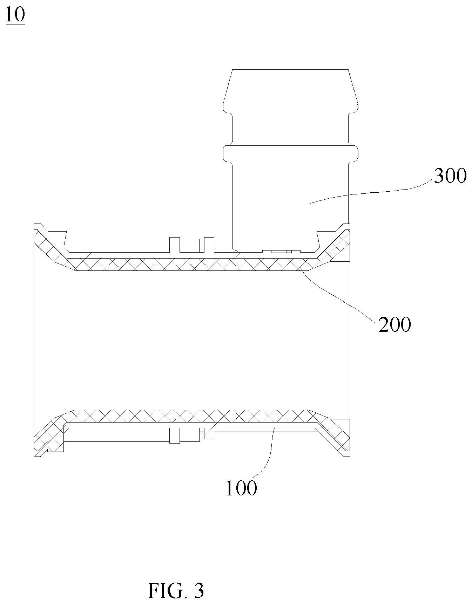

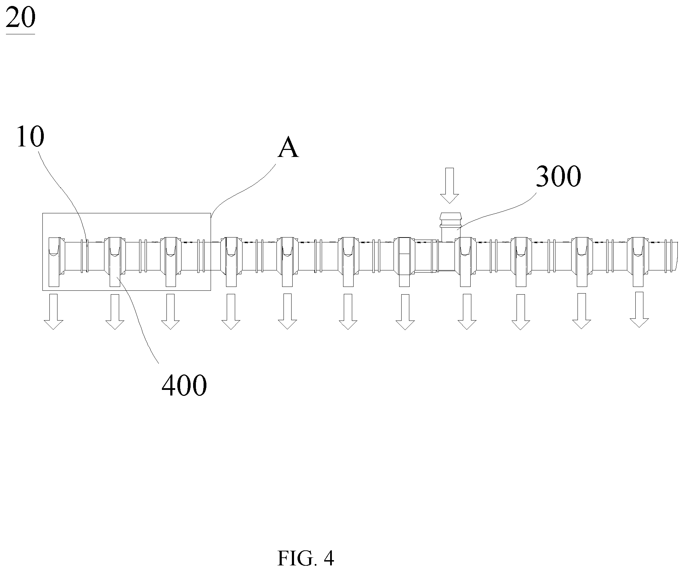

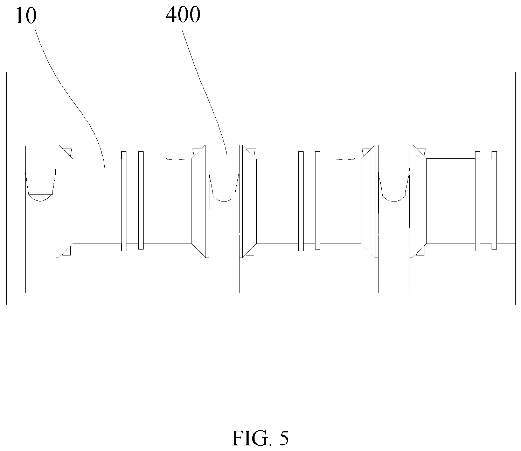

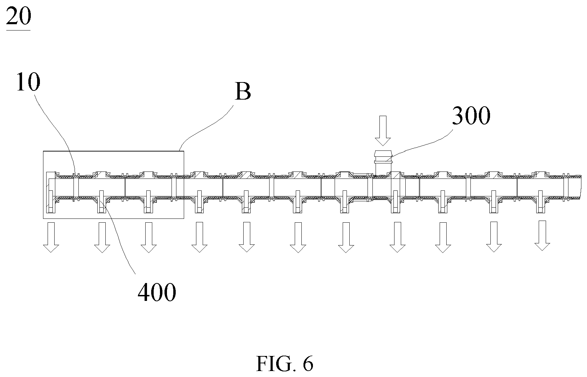

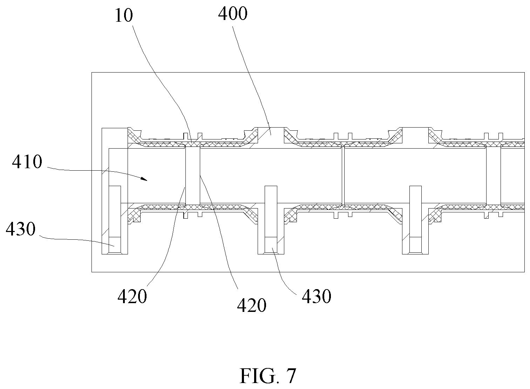

FIG. 1 is a cross-sectional view of the injection-molded tube provided by an embodiment of the present application; FIG. 2 is a structural schematic view of the injection-molded tube provided by an embodiment of the present application; FIG. 3 is a cross-sectional view of the injection-molded tube provided by an embodiment of the present application; FIG. 4 is a structural schematic view of a part of the battery cooling structure provided by an embodiment of the present application; FIG. 5 is an enlarged structural schematic view of the battery cooling structure of FIG. 4 at point A; FIG. 6 is a cross-sectional view of a part of the battery cooling structure provided by an embodiment of the present application; and FIG. 7 is an enlarged structural schematic view of the battery cooling structure of FIG 6 at point B.

As shown in FIGS. 1, 2, and 5 to 7, the injection-molded tube 10 of the embodiment includes an outer tube 100 and an inner tube 200.

The outer tube 100 includes an outer tube body 110 and an injection-molded hole 130 disposed in the outer tube body 110; the inner tube 200 is made of a flexible material, and the inner tube 200 is injection-molded onto the inner wall of the outer tube 100; the outer tube 100 further includes a fastening fitting portion 120 arranged on the outer wall of the outer tube body 110.

In the technical solution of the embodiment, the outer tube 100 is a shell structure of the injection-molded tube 10, and the inner tube 200 is disposed inside the outer tube 100 and is injection-molded onto the inner wall of the outer tube 100. In this way, the connection strength between the inner tube 200 and the outer tube 100 is ensured through injection molding. The hardness of the outer tube is greater than that of the inner tube 200, providing strength support for injection-molded tube 10. When an insertion structure 420 of a cooling structure 400 is inserted into the injection-molded tube 10, since the inner tube 200 is made from the flexible material, the inner tube 200 and the insertion structure 420 can be connected via an interference fit. The inner tube 200 is deformed by the compression of the insertion structure 420, and the outer tube 100 provides strong support for the inner tube 200. The inner tube 200 is tightly wrapped around the outer side of the insertion structure 420 by the elastic restoring force, thereby forming a tight connection between the insertion structure 420 and the injection-molded tube 10. At the same time, the inner tube 200 made of the flexible material may also function to seal the insertion structure 420 and the outer tube 100, thereby further reducing the risk of the leakage of cooling liquid.

In addition, the outer tube 100 also includes a fastening fitting portion 120 disposed on the outer wall of the outer tube body 110. When the injection-molded tube 10 is matched with the insertion structure 420 in a plug-in manner, the fastening fitting portion 120 may facilitate an operator to apply an axial force to the injection-molded tube 10, thereby enabling the injection-molded tube 10 to be tightly connected to the cooling structure 400.

By adopting the injection-molded tube of the embodiment, it is possible to ensure the assembly efficiency of the cooling structure 400 and the injection-molded tube as well as the connection sealing between the cooling structure and the injection-molded tube.

For example, the injection-molded tube of the embodiment is processed using double-shot molding process. The double-shot molding process (also called as 2K molding or two shot molding) refers to a process of molding two different materials of plastics (or two different colored plastics) into one piece in a process of one-shot injection molding. In this process, the first injection material is called a substrate material, and the second injection material is called a covering material.

The most common form of double-shot molding process is that two identical movable dies correspond to two different fixed die cavities, respectively. After the first injection material is injected, the mold is opened first, and then the movable die is rotated by 180° using a rotatable structure of an injection machine, the mold is then closed and a second injection is carried out using a material that is different from that of first injection in color or using different material from that of first injection (covering material). After the mold is opened for the second time, the convex mold that has completed two injections is demolded to form a dual color injection-molded tube. Exemplarily, the material of the outer tube 100 is the substrate material, and the material of the inner tube 200 is the covering material.

It should be noted that the outer tube 100 includes the outer tube body 110, which has an injection-molded hole 130. That is, after injecting of injection material of the outer tube 100 is completed, the injection-molded hole 130 should be left in the outer tube body 110, so that the injection material of the inner tube 200 flows onto the inner wall of the outer tube 100 from the injection-molded hole 130. After injecting of the injection material of the inner tube 200 is completed, a portion of the injection material will flow into the injection-molded hole 130.

It should also be noted that the outer wall of the outer tube body 110 is also provided with a positioning structure 140 that matches with the injection mold. When the movable die is rotated by 180° using the rotatable structure of the injection machine, the positioning structure 140 can cooperate with the movable die, thereby positioning the outer tube 100 on the movable die and reducing the probability of the outer tube 100 falling off the movable die.

The positioning structure 140 may be one or more. For example, there are two positioning structures 140.

As shown in FIGS. 1 and 7, in some embodiments, the inner tube 200 covers at least a portion of the inner wall of the outer tube 100. The inner tube 200 is configured for fitting with the insertion structure 420 in a plug-in manner, playing a role in fastening and sealing. Therefore, the injection area of the inner tube 200 may be determined based on the insertion position of the insertion structure 420. Therefore, the inner tube 200 may cover a portion of the inner wall of the outer tube 100, or may cover the entire inner wall of the outer tube 100.

Exemplarily, the inner tube 200 may cover the entire inner wall of the outer tube 100. That is, the inner tube 200 extends from the first end of the outer tube 100 to the second end of the outer tube 100, and is uniformly distributed in thickness on the inner wall of the outer tube 100.

As shown in FIGS. 1 and 2, in some embodiments, the outer tube body 110 includes a straight section 111 and a first variable-diameter section 112 located at the first end of the straight section 111. The inner diameter of the first variable-diameter section 112 gradually increases in a direction from the straight section 111 to the first variable-diameter section 112.

In the above structure, the inner diameter of the first variable-diameter section gradually increases in the direction from the straight section 111 to the first variable-diameter section 112, thereby forming an expansion part at the first end of the straight section 111, and making it easier to insert the insertion structure 420 into the interior of the injection-molded tube.

As shown in FIGS. 1 and 2, in some embodiments, the outer tube body 110 further includes a second variable-diameter section 113 located at the second end of the straight section 111, and the inner diameter of the second variable-diameter section 113 gradually increases in a direction from the straight section 111 to the second variable-diameter section 113.

In the above structure, the inner diameter of the second variable-diameter section 113 gradually increases in the direction from the straight section 111 to the second variable-diameter section 113, and an expansion part is formed at the second end of the straight section 111, thereby making it easier to insert the insertion structure 420 into the interior of the injection-molded tube.

Of course, in other embodiments not shown in the figures, the first or second variable-diameter section may also be a shrinking part, so that the injection-molded tube may be used to connect other sizes of insertion structures.

As shown in FIGS. 1 and 2, in some embodiments, the fastening fitting portion 120 includes fastening protrusions, which are arranged along the circumferential direction of the outer tube body 110. The fastening protrusions may be convex ring structures arranged continuously in the circumferential direction of the outer tube body 110, or may be multiple protrusion structures arranged at intervals in the circumferential direction of the outer tube body 110.

When connecting, the operator may hold the injection-molded tube 10, and the fastening fitting portion 120 of the injection-molded tube 10 applies a force along the axial direction of the injection-molded tube 10, so that the injection-molded tube 10 may be tightly connected to the insertion structure 420.

As shown in FIGS. 1 and 2, there is a plurality of fastening protrusions, which are arranged at intervals in the axial direction of the outer tube body 110.

In the above structure, the plurality of fastening protrusions are spaced apart in the axial direction of the injection-molded tube 10, making it easier for the operator to apply force.

For example, the fastening protrusion may include a first fastening ring 121 and a second fastening ring 122 arranged at intervals, and the operator may make a clamp clamped between the first fastening ring 121 and the second fastening ring 122, thereby making it more convenient to apply force to the injection-molded tube 10.

As shown in FIG. 3, in some embodiments, the injection-molded tube further includes an inlet pipe 300 arranged on the outer tube 100, the inlet pipe 300 being communicated with the inner tube 200.

Exemplarily, the first end of the injection-molded tube may be inserted with a first cooling structure, and the second end of the injection-molded tube may be inserted with a second cooling structure. The cooling medium enters the injection-molded tube through the inlet pipe 300 first, and then is distributed to the first cooling structure and the second cooling mechanism through the two ends of the injection-molded tube, forming a distribution path for cooling medium.

On the other hand, as shown in FIGS. 4 to 7, the present application also provides a battery cooling structure 20, which includes cooling structures 400 and an injection-molded tube 10 as described above. The cooling structure 400 includes water-cooled chambers 410 and insertion structures 420 connected to the water-cooled chambers 410, and the insertion structure 420 is connected to the inner tube 200 of the injection-molded tube in an interference fit manner. Thus, a tight insertion-connection between the cooling structure 400 and the injection-molded tube 10 is achieved.

Exemplarily, the cooling structure 400 may be a water-cooled plate (only partial structure of the water-cooled plate is shown in FIGS. 4 to 7). The cooling medium may flow into the water-cooled plate through injection-molded tube 10, circulate inside the water-cooled plate, and then be discharged from a water outlet 430, thereby exchanging heat with the battery so as to reduce the risk of thermal runaway of the battery.

It should be noted that in this disclosure, the terms "including", "comprising" or any other variation thereof are intended to cover non-exclusive inclusion, so that a process, method, article or device including a series of elements includes not only those elements, but also other elements not explicitly listed, or further includes elements inherent to such process, method, article or device. Without more restrictions, an element defined by the phrase "including one..." does not exclude the existence of other identical elements in the process, method, article or device including the element.

The embodiments of the present application have been described above with reference to the attached drawings, but the present application is not limited to the above specific embodiments, which are only illustrative, not restrictive. Under the inspiration of the present application, ordinary technicians in this art can make many forms without departing from the purpose of the present application and the scope protected by the claims, which all fall within the protection of the present application.

## Claims

1. An injection-molded tube, comprising: an outer tube (100) and an inner tube (200), wherein
the outer tube (100) comprises an outer tube body (110) and an injection-molded hole (130) disposed in the outer tube body (110);
the inner tube (200) is made of flexible material and is injection-molded onto an inner wall of the outer tube (100);
the outer tube (100) further comprises a fastening fitting portion (120) arranged on an outer wall of the outer tube body (110), and the fastening fitting portion (120) is configured to apply a fastening force to the injection-molded tube along an axial direction of the injection-molded tube.

2. The injection-molded tube according to claim 1, wherein the inner tube (200) covers at least a portion of the inner wall of the outer tube (100).

3. The injection-molded tube according to claim 1, wherein the inner tube (200) covers the entire inner wall of the outer tube (100).

4. The injection-molded tube according to any one of claims 1-3, wherein the outer tube body (110) comprises a straight section (111) and a first variable-diameter section (112) located at a first end of the straight section (111), and an inner diameter of the first variable-diameter section (112) gradually increases in a direction from the straight section (111) to the first variable-diameter section (112).

5. The injection-molded tube according to claim 4, wherein the outer tube body (110) further comprises a second variable-diameter section (113) located at a second end of the straight section (111), and an inner diameter of the second variable-diameter section (113) gradually increases in a direction from the straight section (111) to the second variable-diameter section (113).

6. The injection-molded tube according to any one of claims 1-3, wherein the fastening fitting portion (120) comprises a fastening protrusion, the fastening protrusion being arranged along a circumferential direction of the outer tube body (110).

7. The injection-molded tube according to claim 6, wherein the fastening protrusion is a plurality in number, the plurality of fastening protrusions being arranged at intervals in an axial direction of the outer tube body (110).

8. The injection-molded tube according to any one of claims 1-3, wherein the outer wall of the outer tube body (110) is further provided with a positioning structure (140) for matching with an injection mold.

9. The injection-molded tube according to any one of claims 1-3, wherein the injection-molded tube further comprises an inlet pipe (300) arranged on the outer tube (100), and the inlet pipe is connected to the inner tube (200).

10. A battery cooling structure, comprising: a cooling structure (400) and an injection-molded tube according to any one of claims 1-9, wherein
the cooling structure (400) comprises a water-cooled chamber (410) and an insertion structure (420) communicating with the water-cooled chamber (410), the insertion structure (420) being connected to the inner tube body (200) of the injection-molded tube through interference fit.

## Patentansprüche

1. Spritzgegossenes Rohr, umfassend: ein Außenrohr (100) und ein Innenrohr (200), wobei
das Außenrohr (100) einen Außenrohrkörper (110) und ein in dem Außenrohrkörper (110) angeordnetes spritzgegossenes Loch (130) umfasst;
das Innenrohr (200) aus flexiblem Material gefertigt ist und auf eine Innenwand des Außenrohres (100) spritzgegossen ist;
das Außenrohr (100) weiter einen an einer Außenwand des Außenrohrkörpers (110) angeordneten Befestigungsbeschlagabschnitt (120) umfasst und der Befestigungsbeschlagabschnitt (120) ausgebildet ist, um eine Befestigungskraft entlang einer Axialrichtung des spritzgegossenen Rohrs auf das spritzgegossene Rohr auszuüben.

2. Spritzgegossenes Rohr nach Anspruch 1, wobei das Innenrohr (200) mindestens einen Abschnitt der Innenwand des Außenrohres (100) bedeckt.

3. Spritzgegossenes Rohr nach Anspruch 1, wobei das Innenrohr (200) die gesamte Innenwand des Außenrohres (100) bedeckt.

4. Spritzgegossenes Rohr nach einem der Ansprüche 1-3, wobei der Außenrohrkörper (110) eine gerade Sektion (111) und eine erste Sektion mit variablem Durchmesser (112) umfasst, die sich an einem ersten Ende der geraden Sektion (111) befindet, und ein Innendurchmesser der ersten Sektion mit variablem Durchmesser (112) in einer Richtung von der geraden Sektion (111) zur ersten Sektion mit variablem Durchmesser (112) allmählich zunimmt.

5. Spritzgegossenes Rohr nach Anspruch 4, wobei der Außenrohrkörper (110) weiter eine zweite Sektion mit variablem Durchmesser (113) umfasst, die sich an einem zweiten Ende der geraden Sektion (111) befindet, und ein Innendurchmesser der zweiten Sektion mit variablem Durchmesser (113) in einer Richtung von der geraden Sektion (111) zur zweiten Sektion mit variablem Durchmesser (113) allmählich zunimmt.

6. Spritzgegossenes Rohr nach einem der Ansprüche 1-3, wobei der Befestigungsbeschlagabschnitt (120) einen Befestigungsvorsprung umfasst, wobei der Befestigungsvorsprung entlang einer Umfangsrichtung des Außenrohrkörpers (110) angeordnet ist.

7. Spritzgegossenes Rohr nach Anspruch 6, wobei die Befestigungsvorsprung in der Anzahl eine Vielzahl ist, wobei die Vielzahl von Befestigungsvorsprüngen in einer Axialrichtung des Außenrohrkörpers (110) in Abständen angeordnet ist.

8. Spritzgegossenes Rohr nach einem der Ansprüche 1-3, wobei die Außenwand des Außenrohrkörpers (110) weiter mit einer Positionierstruktur (140) zum Zusammenwirken mit einer Spritzgussform versehen ist.

9. Spritzgegossenes Rohr nach einem der Ansprüche 1-3, wobei das spritzgegossene Rohr weiter ein am Außenrohr (100) angeordnetes Einlassrohr (300) umfasst und das Einlassrohr mit dem Innenrohr (200) verbunden ist.

10. Batteriekühlstruktur, umfassend: eine Kühlstruktur (400) und ein spritzgegossenes Rohr nach einem der Ansprüche 1-9, wobei
die Kühlstruktur (400) eine wassergekühlte Kammer (410) und eine mit der wassergekühlten Kammer (410) in Verbindung stehende Einführungsstruktur (420) umfasst, wobei die Einführungsstruktur (420) durch Presspassung mit dem Innenrohrkörper (200) des spritzgegossenen Rohres verbunden ist.

## Revendications

1. Tube moulé par injection, comprenant : un tube extérieur (100) et un tube intérieur (200), dans lequel
le tube extérieur (100) comprend un corps (110) de tube extérieur et un trou (130) de moulage par injection disposé dans le corps (110) de tube extérieur ;
le tube intérieur (200) est constitué d'un matériau souple et est moulé par injection sur une paroi intérieure du tube extérieur (100) ;
le tube extérieur (100) comprend en outre une partie (120) d'appui de fixation agencée sur une paroi extérieure du corps (110) de tube extérieur, et la partie (120) d'appui de fixation est configurée pour appliquer une force de fixation au tube moulé par injection le long d'une direction axiale du tube moulé par injection.

2. Tube moulé par injection selon la revendication 1, dans lequel le tube intérieur (200) recouvre au moins une partie de la paroi intérieure du tube extérieur (100).

3. Tube moulé par injection selon la revendication 1, dans lequel le tube intérieur (200) recouvre la totalité de la paroi intérieure du tube extérieur (100).

4. Tube moulé par injection selon l'une quelconque des revendications 1 à 3, dans lequel le corps (110) de tube extérieur comprend une section droite (111) et une première section (112) à diamètre variable située au niveau d'une première extrémité de la section droite (111), et un diamètre intérieur de la première section (112) à diamètre variable augmente graduellement dans une direction allant de la section droite (111) à la première section (112) à diamètre variable.

5. Tube moulé par injection selon la revendication 4, dans lequel le corps (110) de tube extérieur comprend en outre une deuxième section (113) à diamètre variable située au niveau d'une deuxième extrémité de la section droite (111), et un diamètre intérieur de la deuxième section (113) à diamètre variable augmente graduellement dans une direction allant de la section droite (111) à la deuxième section (113) à diamètre variable.

6. Tube moulé par injection selon l'une quelconque des revendications 1 à 3, dans lequel la partie (120) d'appui de fixation comprend une saillie de fixation, la saillie de fixation étant agencée le long d'une direction circonférentielle du corps (110) de tube extérieur.

7. Tube moulé par injection selon la revendication 6, dans lequel la saillie de fixation est une pluralité en nombre, la pluralité de saillies de fixation étant agencée à des intervalles dans une direction axiale du corps (110) de tube extérieur.

8. Tube moulé par injection selon l'une quelconque des revendications 1 à 3, dans lequel la paroi extérieure du corps (110) de tube extérieur est en outre munie d'une structure de positionnement (140) pour correspondre à un moule d'injection.

9. Tube moulé par injection selon l'une quelconque des revendications 1 à 3, dans lequel le tube moulé par injection comprend en outre un tuyau d'entrée (300) agencé sur le tube extérieur (100), et le tuyau d'entrée est relié au tube intérieur (200).

10. Structure de refroidissement de batterie, comprenant : une structure de refroidissement (400) et un tube moulé par injection selon l'une quelconque des revendications 1 à 9, dans laquelle
la structure de refroidissement (400) comprend une chambre (410) refroidie par eau et une structure d'insertion (420) en communication avec la chambre (410) refroidie par eau, la structure d'insertion (420) étant reliée au corps de tube intérieur (200) du tube moulé par injection au moyen d'un ajustement serré.
